# EUROPÄISCHE PATENTANMELDUNG

(11) **EP 1 375 207 A2**
(43) Veröffentlichungstag der Anmeldung: **02.01.2004**
(21) Anmeldenummer: 03009653.1
(22) Anmeldetag: 30.04.2003
(51) Int. Cl.: B60G 17/052

(54) **Einrichtung und Verfahren zur Steuerung von Betriebsfunktionen bei vollluftgefederten Nutzkraftwagen**

(30) Priorität: 20.06.2002 DE 10227453
(71) Anmelder: WABCO GmbH & CO. OHG, 30453 Hannover (DE)
(72) Erfinder: Lentz, Uwe, 31535 Neustadt (DE); Lucas, Johann, 31319 Sehnde (DE)
(74) Vertreter: Schrödter, Manfred

(57) **Zusammenfassung**

Die Erfindung betrifft eine Einrichtung und ein Verfahren zur Steuerung von Betriebsfunktionen von Nutzkraftwagen mit einer lenkbaren Vorderachse, wenigstens einer Triebachse und mindestens einer weiteren Achse sowie mit einer Luftfederbälge 14, 16, 18, 20, 24, 26 aufweisenden Luftfedereinrichtung. Um an der Vorderachse eine Mindestachslast für eine ausreichende Lenkbarkeit zu gewährleisten, ist wenigstens ein die Vorderachslast messender Lastsensor 30 vorgesehen sowie eine elektronische Steuereinheit 32, die die Messsignale des Lastsensors der Vorderachse 4 mit einem vorgegebenen Mindestachslastwert vergleicht, bei der noch eine ausreichende Lenkbarkeit der Vorderräder der Vorderachse gegeben ist. Ferner ist eine von der Steuereinheit 32 steuerbare Ventilanordnung 22 vorgesehen, über die die Luftfederbälge 24, 26 der weiteren Achse 8 belüftbar oder entlüftbar sind. Die Steuereinheit 32 ist so ausgebildet, dass bei einer Beladung des Nutzkraftwagens der Druck in den Luftfederbälgen der Luftfeder 24, 26 der weiteren Achse so eingestellt wird, dass an der Vorderachse stets wenigstens die vorgegebene Mindestachslast zur Sicherstellung ausreichender Lenkbarkeit der Vorderräder der Vorderachse anliegt.

## Beschreibung

Die Erfindung bezieht sich auf eine Einrichtung zur Steuerung von Betriebsfunktionen bei vollluftgefederten Nutzkraftwagen, insbesondere Lastkraftwagen, Bus und Zugmaschine, gemäß Oberbegriff des Anspruchs 1. Die Erfindung betrifft ferner ein Verfahren zur Erzeugung eines Stellsignals für eine entlastbare und belastbare Fahrzeugachse gemäß Anspruch 3.

Wenn bspw. ein dreiachsiger Nutzkraftwagen, bspw. ein Müllfahrzeug, mit einer lenkbaren Vorderachse, einer zweiten angetriebenen Achse (Triebachse) und einer weiteren dritten Achse beladen wird, besteht die Gefahr, dass durch die Lastschwerpunktverschiebung nach hinten ein Kippmoment um die zweite Achse entsteht, durch das die Vorderachse angehoben und somit der zum Lenken notwendige Mindestdruck auf die Vorderräder der Vorderachse unterschritten wird.

Der Erfindung liegt daher die Aufgabe zugrunde, eine Einrichtung und ein Verfahren anzugeben, mittels derer bei einem vollluftgefederten Nutzkraftwagen mit Luftfederanordnung bei jedem Beladungszustand eine für eine ausreichende Lenkbarkeit der Vorderräder der Vorderachse erforderliche, auf die Vorderachse wirkende Mindestlast gewährleistet ist.

Diese Aufgabe wird durch die Erfindung gemäß Anspruch 1 und 3 gelöst.

Durch die Erfindung kann die Last des Fahrzeugs so auf die Achsen verteilt werden, dass durch entsprechende Lastschwerpunktverschiebung stets wenigstens eine Mindestlast für die Vorderachse eingeregelt wird zur Sicherstellung einer ausreichenden Lenkbarkeit der Vorderräder der Vorderachse. Dies wird erreicht durch gezieltes Belüften oder Entlüften von Luftfederbälgen von einer oder mehreren entlastbaren und belastbaren Fahrzeugachsen in Abhängigkeit von der an der Vorderachse gemessenen Last.

Der Luftdruck im Luftfederbalg kann dabei stufenlos oder in Stufen graduell verändert werden.

Die Erfindung soll nachfolgend anhand der beigefügten Zeichnung, in der schematisch ein Ausführungsbeispiel dargestellt ist, näher erläutert werden.

Es zeigen
- Fig. 1: eine schematische Darstellung der erfindungsgemäßen Einrichtung und
- Fig. 2: das erfindungsgemäße Verfahren anhand eines Flussdiagramms.

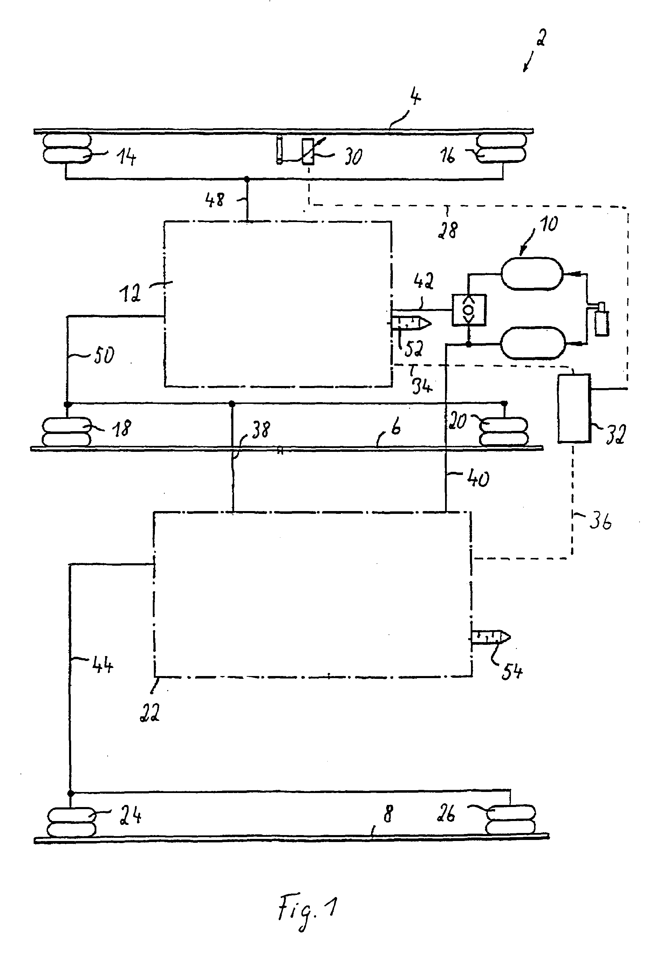

Die Fig. 1 zeigt schematisch eine Luftfedereinrichtung 2 eines vollluftgefederten Nutzkraftwagens, der eine lenkbare Vorderachse 4, eine Triebachse 6 und eine nichtangetriebene Achse 8 aufweist, die hier als Nachlaufachse dargestellt ist, aber auch als Vorlaufachse ausgebildet sein kann. Diese nichtangetriebene Achse wird nachfolgend dritte Achse genannt.

Die Luftfedereinrichtung 2 umfasst eine Druckquelle 10, einen ersten Ventilblock 12 für Luftfederbälge 14, 16 der Vorderachse 4 und für Luftfederbälge 18, 20 der Triebachse 6 sowie einen zweiten Ventilblock 22 für Luftfederbälge 24, 26 der dritten Achse 8.

An der Vorderachse 4 ist ein Lastsensor 30 angeordnet, welcher über eine elektrische Verbindungsleitung 28 an eine elektrische Steuereinheit 32 angeschlossen ist. Der Lastsensor kann auch an ein weiteres Steuergerät angeschlossen sein, welches Daten konvertiert und als Gateway dient und Daten an die Steuereinheit 32 weiterleitet. Von der elektrischen Steuereinheit 32 führen elektrische Verbindungsleitungen 34 und 36 zu den Ventilblöcken 12 und 22. Eine Verbindungsleitung 38 verbindet die Luftfederbälge 18 und 20 der Triebachse 6 mit dem Ventilblock 22. Von der Druckquelle 10 führen Druckversorgungsleitungen 40, 42 zu den Ventilblöcken 22 und 12. Vom Ventilblock 22 führt eine Druckleitung 44 zu den Luftfederbälgen 24, 25 der dritten Achse 8. Druckleitungen 48 und 50 führen vom Ventilblock 12 zu den Luftfederbälgen 14, 16 der Vorderachse 4 und zu den Luftfederbälgen 18, 20 der Triebachse 6.

Mit dem Bezugszeichen 52, 54 sind Entlüftungsstellen bezeichnet.

Die Funktionsweise der erfindungsgemäßen Einrichtung ist wie folgt:

Wird der Nutzkraftwagen teil- oder vollbeladen, ergibt sich in der Regel eine Lastschwerpunktverschiebung nach hinten, wodurch ein Kippmoment um die zweite Achse, hier die Triebachse 6, entsteht und die Vorderachse 4 entlastet, d. h. angehoben wird. Je nach Größe des Kippmomentes kann die Entlastung der Vorderachse so groß sein, dass eine zum Lenken notwendige Mindestlast auf den Vorderrädern unterschritten wird. Der Lastsensor 30 der Vorderachse 4 misst die Last auf der Vorderachse, und gibt die Messwerte an die Steuereinrichtung 32 ab, in der der gemessene Lastwert M_{Last} mit einem gespeicherten Mindestlastwert M_{Mind} verglichen wird, bei dem die Vorderräder der lenkbaren Vorderachse 4 noch ausreichend lenkbar sind. Bei Unterschreitung des Mindestlastwertes steuert die Steuereinrichtung 32 den Ventilblock 22 so an, dass durch Druckbelastung, bzw. Belüften der Tragbälge 24, 26 der dritten Achse 8 diese stufenlos oder in kleinen Schritten graduell belastet wird. Hierdurch wird die Triebachse 6 mehr entlastet, wodurch die Vorderachse 4 einen Teil der Last mit übernimmt. Die Entlastung erfolgt dabei soweit, bis die Last auf der Vorderachse bzw. den Vorderrädern wenigstens der zur Aufrechterhaltung der Lenkbarkeit der Vorderräder erforderlichen Mindestlast entspricht.

Ist der gemessene Lastwert M_{Last} gleich oder größer als der Mindestlastwert M_{Mind} wird die dritte Achse nicht entlastet oder gegebenenfalls zusätzlich entlastet durch Entlüften der Luftfederbälge 24,26, falls die gemessene Vorderachslast einen vorgebbaren Maximalwert M_{MaX} überschreitet, um so die Achslast auf der Vorderachse zu senken.

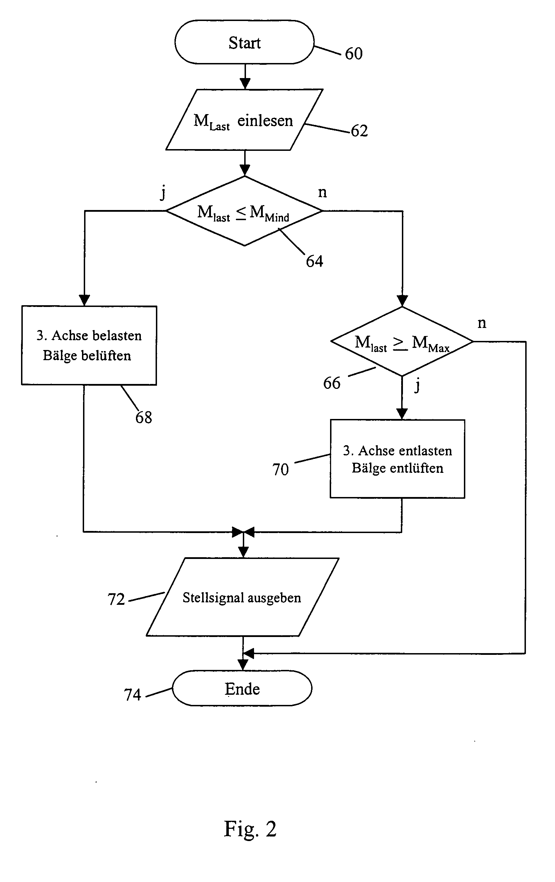

Das erfindungsgemäße Verfahren ist in der Fig. 2 dargestellt. Es beginnt mit dem Block 60 "Start". In einem darauf folgenden Datentransferblock 62 wird der Messwert der Vorderachslast M_{Last} eingelesen. Dann wird in einem Verzweigungsblock 64 die Bedingung M_{Last} ≤ M_{Mind} für die Entlastung der dritten Achse 8 geprüft, d.h. es wird geprüft, ob die gemessene Vorderachslast kleiner oder gleich einer vorgebbaren Mindestlast M_{Mind} ist. Wenn diese Bedingung erfüllt ist, wird in einem Zuweisungsblock 68 ein Stellsignal "3. Achse belasten" erzeugt, das dann in einem Datentransferblock 72 ausgegeben wird. Das Verfahren endet mit dem Block 74.

Ist die Bedingung nicht erfüllt, wird zu einem weiteren Verzweigungsblock 66 verzweigt, in dem überprüft wird, ob die gemessene Vorderachslast M_{Last} größer oder gleich einer vorgebbaren maximalen Achslast M_{Max} ist. Wenn das nicht der Fall ist, endet das Verfahren. Wenn die Bedingung erfüllt ist, wird in einem Zuweisungsblock 70 ein Stellsignal "3. Achse entlasten" erzeugt, das dann im Datentransferblock 72 ausgegeben wird. Das Verfahren endet dann mit dem Block 74.

Anhand der Zeichnung wurde nur die Entlastung durch Entlüften der Luftfederbälge und Belastung durch Belüften der Luftfederbälge der dritten Achse zur Steuerung der Vorderachslast beschrieben. Es kann aber auch die Triebachse durch entsprechende Belastung und Entlastung in diese Steuerung mit einbezogen werden.

## Patentansprüche

1. Einrichtung zur Steuerung von Betriebsfunktionen bei einem vollluftgefederten Nutzkraftwagen, der mit einer lenkbaren Vorderachse, wenigstens einer Triebachse und mindestens einer weiteren Achse sowie mit einer Luftfederbälge aufweisenden Luftfedereinrichtung ausgerüstet ist, **gekennzeichnet durch** folgende Merkmale:
a) es ist wenigstens ein die Vorderachslast messender Lastsensor (30) vorgesehen;
b) es ist eine elektronische Steuereinheit (32) vorgesehen, die einen Signaleingang aufweist, der mit einem Signalausgang des Lastsensors (30) verbunden ist und die die Messsignale M_{Last} des Lastsensors der Vorderachse (4) mit einer in der Steuereinheit gespeicherten vorgebbaren Mindestachslast M_{Mind} vergleicht, bei der noch eine ausreichende Lenkbarkeit der Vorderräder der Vorderachse gegeben ist;
c) es ist eine von der Steuereinheit (32) steuerbare Ventilanordnung (22) vorgesehen, die mit entsprechenden Ausgängen der Steuereinheit (32) verbundene Steuereingänge aufweist und über die die Luftfeder-bälge (24, 26) der wenigstens einen weiteren Achse (8) mit einer Druckmittelquelle (10) des Nutzkraft-wagens zum wenigstens teilweise Belüften und mit der Atmosphäre zum wenigstens teilweise Entlüften verbindbar ist;
d) die Steuereinheit (32) ist so ausgebildet, dass bei einer Beladung des Nutzkraftwagens der Druck in den Luftfederbälgen (24, 26) der wenigstens einen weiteren Achse (8) so eingestellt wird, dass an der Vorderachse (4) stets wenigstens die vorgegebene Mindestachslast zur Sicherstellung ausreichender Lenkbarkeit der Vorderräder anliegt.

2. Einrichtung nach Anspruch 1, **dadurch gekennzeichnet, dass** der Luftdruck in den Luftfederbälgen (24, 26) der wenigstens einen weiteren Achse (8) stufenlos oder in Stufen graduell veränderbar ist.

3. Verfahren zur Erzeugung von Stellsignalen für entlüftund belüftbare Luftfederbälge wenigstens einer Fahrzeugachse insbes. von vollluftgefederten Nutzkraftwagen nach Anspruch 1 und 2, **dadurch gekennzeichnet, dass**
- die Achslast M_{Last} der Vorderachse gemessen wird,
- die Vorderachslast M_{Last} mit einer vorgebbaren, für eine ausreichende Lenkbarkeit der Vorderräder der Vorderachse erforderliche Mindestachslast M_{Mind} verglichen wird,
- Stellsignale erzeugt werden, wenn die gemessene Vorderachslast die Mindestachslast unterschreitet, und
- die zur Vorderachse entferntere Fahrzeugachse (bspw. dritte Achse) durch Belüften der Luftfederbälge wenigstens teilweise belastet oder die der Vorderachse näher angeordnete Fahrzeugachse (bspw. Triebachse) durch Entlüften der Luftfederbälge zusätzlich entlastet wird oder die entferntere Achse teilweise belastet und die nähere Achse entsprechend teilweise entlastet werden, wenn die gemessene Vorderachslast die Mindestachslast unterschreitet.

4. Verfahren nach Anspruch 3, **dadurch gekennzeichnet, dass** die zur Vorderachse entferntere Fahrzeugachse entlastet wird oder die der Vorderachse nähere Achse belastet wird, wenn die gemessene Vorderachslast eine vorgebbare Maximallast für die Vorderachse überschreitet.
